# EUROPÄISCHE PATENTSCHRIFT

(11) **EP 0 718 652 B1**
(45) Veröffentlichungstag und Bekanntmachung des Hinweises auf die Patenterteilung: **08.09.1999**
(21) Anmeldenummer: 95810685.8
(22) Anmeldetag: 31.10.1995
(51) Int. Cl.: G02B 6/38

(54) **Steckergehäuse für ein optisches Steckerpaar**
Connector housing for a pair of optical plugs
Boîtier de prise pour paire de connecteurs optiques

(30) Priorität: 23.12.1994 CH 393494
(43) Veröffentlichungstag der Anmeldung: 26.06.1996
(73) Patentinhaber: DIAMOND S.A., CH-6616 Losone-Locarno (CH)
(72) Erfinder: De Marchi, Silverio, CH-6646 Contra (CH)
(74) Vertreter: Wenger, René

(56) Entgegenhaltungen:
- WO-A-94/24592
- DE-C- 4 302 826
- US-A- 4 790 763
- US-A- 4 797 123
- US-A- 5 123 071
- US-A- 5 343 547
- US-A- 5 386 487
- IBM TECHNICAL DISCLOSURE BULLETIN, Bd. 38, Nr. 9, 1.September 1995, Seite 377/378 XP000540301 "DUPLEX FIBER OPTIC CONNECTOR HOUSING"

## Beschreibung

Die Erfindung betrifft ein Steckergehäuse für ein optisches Steckerpaar gemäss dem Oberbegriff von Anspruch 1. Bei diesen sogenannten Duplex-Steckern ist es für die Herstellung einer möglichst dämpfungsarmen Lichtübertragung an der Steckverbindung von grosser Bedeutung, dass die beiden Steckerteile nicht starr parallel nebeneinander gehalten werden, sondern dass jedes Steckerteil in einem begrenzten Mass eine Relativbewegung ausführen kann. Dies gilt insbesondere auch für Steckverbindungen des Push-Pull-Typs, der international unter der Typenbezeichnung SC genormt ist.

Es ist bereits bekannt, die Gehäuseteile so auszubilden, dass je zwei Gehäuseteile mit Hilfe einer Verbindungsklammer zusammengehalten werden können. Durch die WO 94/24592 ist beispielsweise eine Verbindungsanordnung bekannt geworden, bei welcher eine zweiteilige Verbindungsklammer auf die Gehäuseteile aufgeschnappt werden kann. Die Verbindung erfolgt über eine bogenartige Materialbrücke an jeder Klammerhälfte. Ein anderes Verbindungsprinzip ist in der US-A 5,123,071 beschrieben. Dort werden die Gehäuseteile mittels E-förmiger Klammern zusammengehalten, wobei zwei Klammern ineinander einrastbar sind, die Gehäuseteile jedoch spezielle Führungsflächen aufweisen müssen.

Aus der EP-A 597 501 ist es aber auch bereits bekannt, zwei Gehäuseteile ohne zusätzliche Hilfsmittel direkt über einen flexiblen Materialsteg einstückig miteinander zu verbinden. Die Verbindung besteht dabei aus einem etwa Z-förmigen Materialsteg.

DE-C1-43 02 826 offenbart eine H-förmige Halteklammer, in die die einzelnen optischen Steckverbinder-Gehäuse mittels einer Einrastbewegung auf einer durch die beiden Steckverbinder-Gehäuse verlaufenden Ebene und quer zur Längsrichtung der Gehäuse einrastbar sind.

Separate Verbindungsklammern haben den Nachteil, dass nicht nur die Gehäuseteile speziell angepasst werden müssen, sondern dass auch noch zusätzliche Bauteile erforderlich sind, die leicht verloren gehen können. Je nach Ausbildung der Klammern ist die Verbindungsstabilität zudem nicht befriedigend. Aber auch die einstückige Ausbildung der beiden Gehäuseteile ist mit erheblichen Nachteilen verbunden, da relativ aufwenige Werkzeuge für die Herstellung erforderlich sind.

Es ist daher eine Aufgabe der Erfindung, ein Steckergehäuse der eingangs genannten Art zu schaffen, das die Vorteile separater Gehäuseteile aufweist, ohne dass für die Verbindung zusätzliche Klammern erforderlich sind. Das Verbindungsmittel soll ausserdem eine sichere Verbindung gewährleisten, wobei jedoch ein genügender Bewegungsspielraum verbleibt. Die beim Einstecken und Ausstecken auftretenden Druck- und Zugbelastungen sollen sich zudem nicht negativ auf die Stabilität des Verbindungsmittels auswirken. Diese Aufgabe wird erfindungsgemäss mit einem Steckergehäuse gelöst, das die Merkmale im Anspruch 1 aufweist.

Der Schnappverschluss löst das Problem der Verbindung ohne zusätzliche Bauteile. Die Einrastung auf einer durch die beiden Gehäuseteile verlaufenden Ebene und quer zur Längsrichtung der Gehäuseteile ermöglicht die Schaffung günstiger Voraussetzungen für die Bewegungsmöglichkeit und die mechanische Belastung der beiden Gehäuseteile.

Besonders vorteilhaft weist der Schnappverschluss am ersten Gehäuseteil ein Sperrklinkenpaar und am zweiten Gehäuseteil ein Sperrleistenpaar auf. Die Klinken und Leisten erstrecken sich über eine bestimmte Länge und ergeben so eine stabile Verbindung. Alternativ wären aber auch andere Schnappverschlüsse denkbar wie z.B. Schnappwulste oder Schnappnocken.

Die Gehäuseteile können etwa quaderförmig ausgebildet sein und das Steckergehäuse erscheint insgesamt als homogene Einheit, wenn das Sperrklinkenpaar und das Sperrleistenpaar an einander zugewandten Längsseiten der Gehäuseteile angeordnet sind, wobei das aussenliegende Sperrklinkenpaar im eingerasteten Zustand das innenliegende Sperrleistenpaar überlappt. Dabei sind die Sperrklinken des Sperrklinkenpaars vorzugsweise an federnden Zungen angeordnet, welche in der Ebene paralleler Seitenwände am ersten Gehäuseteil verlaufen. Die Sprerrklinken und Zungen überdecken auf diese Weise die eigentliche Schnappverbindung, so dass Sie von aussen nicht ohne weiteres zugänglich ist. Beim Anfassen des Steckergehäuses an den parallelen Seitenwänden werden die Sperrklinken gegen die Sperrleisten gepresst, was die Verbindung noch verstärkt.

Eine besonders hohe Stabilität der Schnappverbindung in Axialrichtung der Steckerteile ergibt sich, wenn auf beiden Seiten der Zungen und im Abstand zu diesen Stützelemente an der Längsseite des ersten Gehäuseteils angeordnet sind, wobei zwischen den Stützelementen und den Zungen Ausnehmungen gebildet werden, und wenn auf beiden Seiten der Sperrleisten und anschliessend an diese Führungselemente an der Längsseite des zweiten Gehäuseteils angeordnet sind, welche in die Ausnehmungen des ersten Gehäuseteils eingreifen. Auf diese Weise ergibt sich eine Art Verschachtelung der beiden Gehäuseteile, wobei je nach Dimensionierung der Ausnehmungen bzw. der Führungselemente ein maximales Spiel in Längsrichtung zwischen den beiden Gehäuseteilen zugelassen werden kann. Nach Ueberwindung dieses Spiels werden Kräfte in Längsrichtung, die am einen Gehäuseteil angreifen unmittelbar auf das andere Gehäuseteil übertragen.

Gegen Verdrehung können die beiden Gehäuseteile gesichert werden, wenn in den Stützelementen in der Einrastebene verlaufende Schlitze angeordnet sind und wenn die Führungselemente Seitenlappen aufweisen, welche in die Schlitze eingreifen. Dabei kann aber trotzdem eine bestimmte Elastizität erhalten bleiben, wenn die Führungselemente und die Seitenlappen in der Einrastebene geteilt ausgebildet sind.

Weitere Vorteile und Einzelmerkmale der Erfindung ergeben sich aus den Zeichnungen und aus der nachfolgenden Beschreibung eines Ausführungsbeispiels. Es zeigen:
- Figur 1: Ein erstes und ein zweites Gehäuseteil vor dem Zusammenrasten,
- Figur 2: die zusammengerasteten Gehäuseteile gemäss Figur 1 vor dem Einbau der Steckerteile,
- Figur 3: ein Schnitt durch die Ebene A-A gemäss Figur 1,
- Figur 4: ein Schnitt durch die Ebene B-B gemäss Figur 1,
- Figur 5: ein Schnitt durch die Ebene C-C gemäss Figur 1,
- Figur 6: ein Schnitt durch die Ebene D-D gemäss Figur 1,
- Figur 7: ein Schnitt durch die Ebene E-E gemäss Figur 1,
- Figur 8: ein Schnitt durch die Ebene F-F gemäss Figur 1,
- Figur 9: ein Schnitt durch die Ebene G-G gemäss Figur 1,
- Figur 10: ein Schnitt durch die Ebene H-H gemäss Figur 1,
- Figur 11: ein Schnitt durch die Ebene I-I gemäss Figur 2,
- Figur 12: ein Schnitt durch die Ebene K-K gemäss Figur 2 und,
- Figur 13: ein Schnitt durch die Ebene L-L gemäss Figur 2.

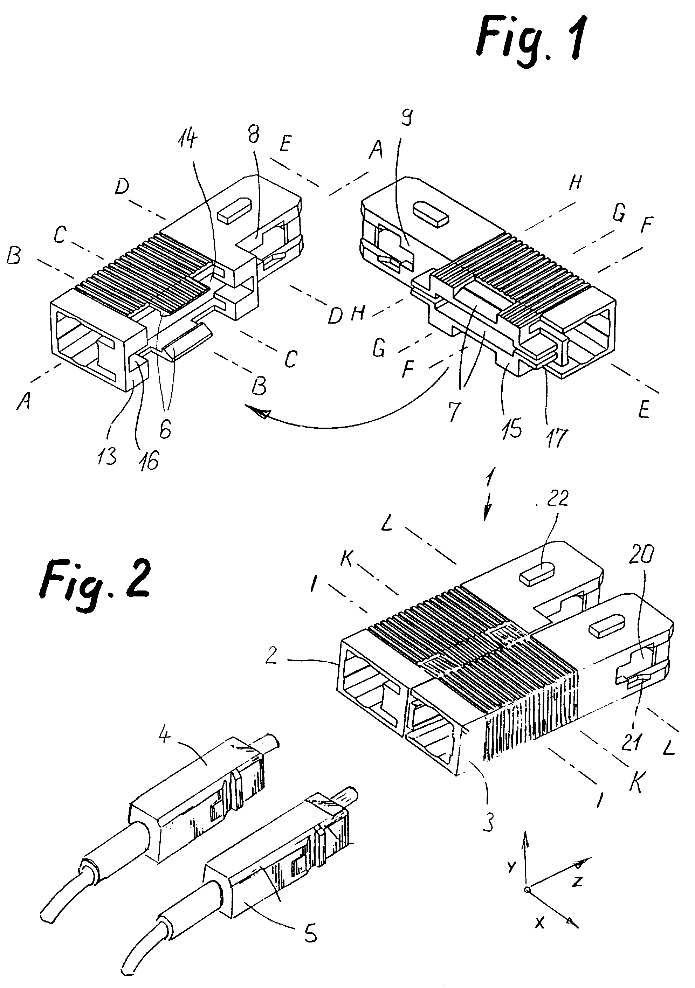

Aus den Figuren 1 und 2 ist der grundsätzliche Aufbau eines erfindungsgemässen Steckergehäuses ersichtlich, während weitere Einzelheiten aus den nachfolgenden Schnittdarstellungen ersichtlich sind. Das Steckergehäuse 1 besteht im wesentlichen aus einem ersten Gehäuseteil 2 und aus einem zweiten Gehäuseteil 3, vorzugsweise aus einem Kunststoffmaterial. Die beiden Gehäuseteile sind auch so ausgebildet, dass sie ohne zusätzliche Schieber in einem möglichst einfachen Spritzgusswerkzeug hergestellt werden können.

Die beiden etwa quaderförmigen Gehäuseteile sind dazu bestimmt ein erstes Steckerteil 4 und ein zweites Steckerteil 5 aufzunehmen. Dabei handelt es sich um Steckerteile an sich bekannter Bauart, welche derart in die beiden Gehäuseteile 2 und 3 eingeprellt werden können, dass sie mit axialem Spiel darin festgehalten werden. Gehäuseteile und Steckerteile bilden insgesamt eine optische Steckereinheit, welche nach dem Push-Pull-Prinzip gesteckt werden kann. Dazu sind an den Gehäuseteilen Oeffnungen 20 und Entriegelungsrampen 21 vorgesehen, welche mit parallelen Halteklauen an einem hier nicht dargestellten Buchsenteil zusammenwirken. Bei einem Zug am Lichtwellenleiterkabel kann die Steckverbindung nicht gelöst werden. Ein Zug am Steckergehäuse bewirkt jedoch eine Relativverschiebung zwischen dem Steckergehäuse und den Steckerteilen, wobei die Entriegelungsrampen 21 in Aktion treten und die Verriegelung lösen. Das Push-Pull-Steckprinzip ist dem Fachmann jedoch längst bekannt.

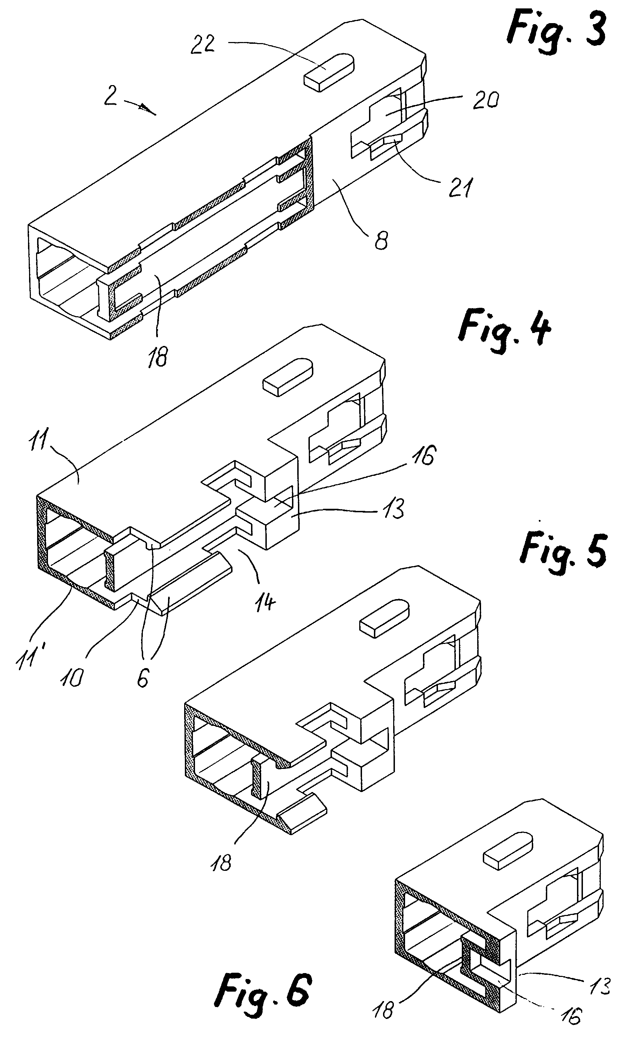

Auf den Gehäuseteilen 2 und 3 sind Positioniernasen 22 angeordnet, welche ein lagerichtiges Einstecken des Duplexsteckers in die Buchse gewährleisten. Wie insbesondere aus Figur 4 ersichtlich ist, weist das erste Gehäuseteil 2 ein Sperrklinkenpaar 6 auf, wobei die einzelnen Sperrklinken an federnden Zungen 10 befestigt sind. Diese Zungen verlaufen in der Ebene der parallelen Seitenwände 11, 11'. Im Abstand zu den Zungen 10 sind an der Längsseitenwand 8 Stützelemente 13 angeordnet, deren Tiefe der Tiefe der Zungen entspricht. Zwischen den Zungen und den Stützelementen werden dadurch Ausnehmungen 14 gebildet. In den Stützelementen sind ausserdem Schlitze 16 angeordnet, welche parallel zu den Seitenwänden 11 bzw. 11' verlaufen. Diese Schlitze sind nicht durchgehend, sondern öffnen sich nur gegen die Zungen 10.

Die Stützelemente auf beiden Seiten der Zungen sind mittels einer Anschlagleiste 18 miteinander verbunden. Wie insbesondere aus Figur 3 hervorgeht, verläuft diese Anschlagleiste etwa in der Ebene der Längsseitenwand 8.

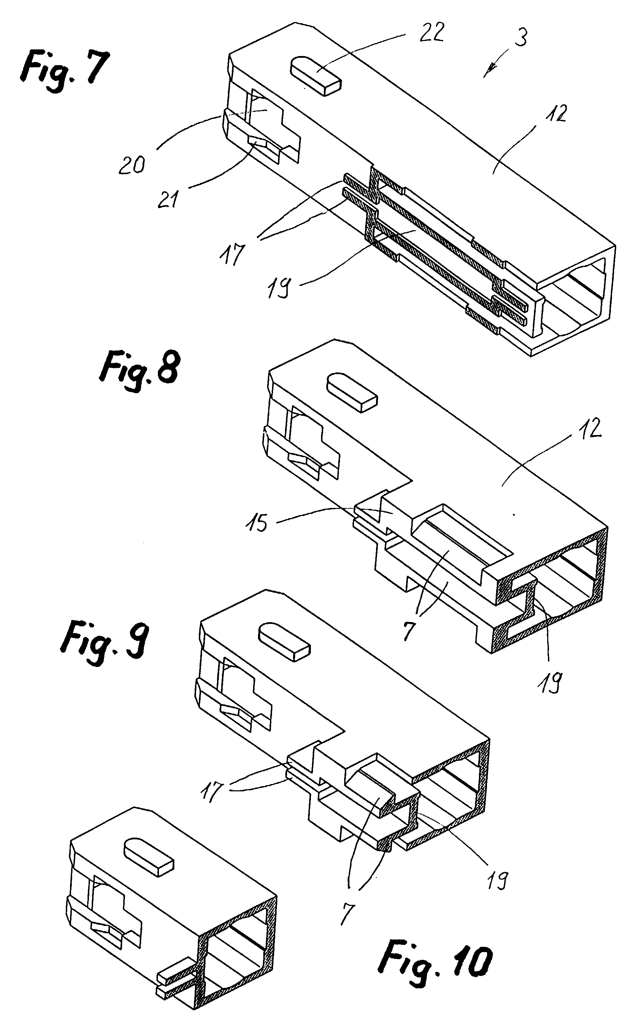

Die Konfiguration des zweiten Gehäuseteils 3 ergibt sich im Detail aus den Figuren 7 bis 10. An der Längsseitenwand 9 sind Führungselemente 15 angeordnet, welche in die Ausnehmung 14 am ersten Gehäuseteil mit Spiel passen. Diese Führungselemente schliessen sich unmittelbar an das Sperrleistenpaar 7 an, wobei die einzelnen Sperrleisten auch noch über einen U-förmigen Verbindungssteg 19 miteinander verbunden sind. Dadurch ergibt sich eine relativ starre Ausbildung des Sperrleistenpaars. Seitlich an die Führungselemente 15 schliessen sich Seitenlappen 17 an, welche in die Schlitze 16 des ersten Gehäuseteils mit Spiel passen. In der Ebene der Seitenwände 12 bzw. 12' sind jedoch die Führungselemente 15 und die Seitenlappen 17 geteilt ausgebildet. Dies ergibt sich besonders deutlich aus Figur 7. Dadurch bleibt eine gewisse Elastizität erhalten, wenn die beiden Gehäuseteile zusammengerastet sind.

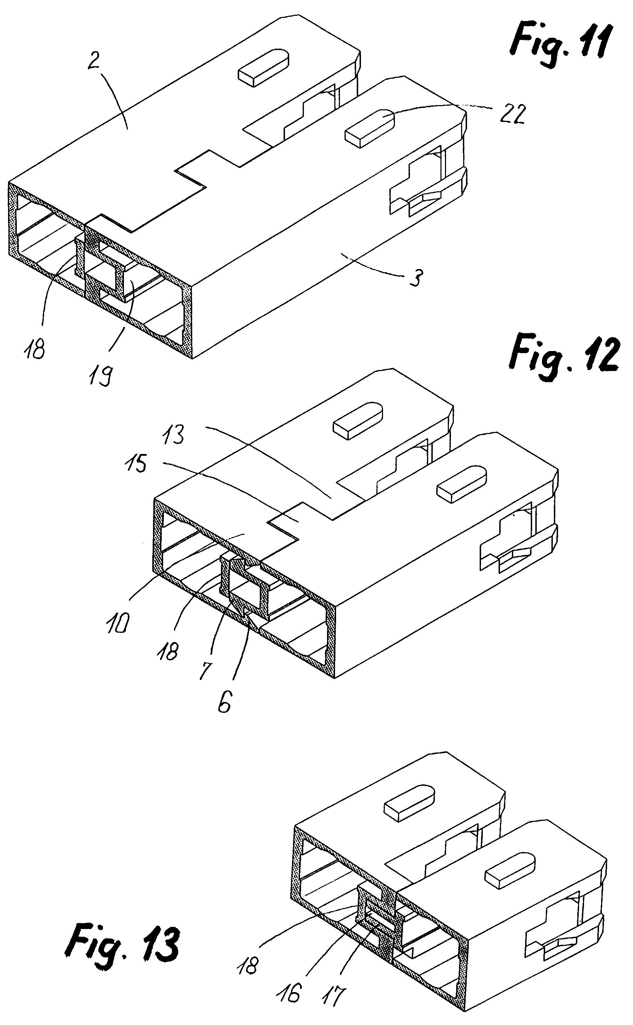

Das Ineinandergreifen der einzelnen Bauteile im zusammengerasteten Zustand ergibt sich aus den Figuren 11 bis 13. Insbesondere die Figur 12 zeigt dabei, wie das Sperrklinkenpaar 6 hinter dem Sperrleistenpaar 7 einrastet. Die Flanken der Sperrklinken und der Sperrleisten sind angeschrägt, um ein Zusammenrasten ohne übermässigen Kraftaufwand zu ermöglichen. Die Sperrleisten liegen stirnseitig an der Anschlagleiste 18 an, wodurch eine gute Seitenstabilität erreicht wird. Die Seitenlappen 17 greifen fast passgenau in die Schlitze 16, wobei aber trotzdem eine geringe Kippbewegung zwischen den beiden Gehäuseteilen möglich bleibt.

In der Z-Achse (Figur 2) ist nur ein relativ geringes Spiel vorhanden, während in der X-Achse die beiden Gehäuseteile federnd zusammengehalten werden. In der Y-Achse sind geringe Kippbewegungen möglich.

## Patentansprüche

1. Steckergehäuse für ein optisches Steckerpaar, bestehend aus einem ersten länglichen Gehäuseteil (2) zur Aufnahme eines ersten Steckerteils (4) und aus einem zweiten länglichen Gehäuseteil (3) zur Aufnahme eines zweiten Steckerteils (5), wobei die beiden Gehäuseteile über Verbindungsmittel derart längs nebeneinander gehalten sind, dass sie in verschiedenen Raumachsen (x, y, z) relativ zueinander begrenzt beweglich sind, dadurch gekennzeichnet, dass die Verbindungsmittel durch einen Schnappverschluss gebildet werden, dessen Elemente an benachbarten Längsseitenwänden (8, 9) der länglichen Gehäuseteile (2, 3) angeordnet und einstückig mit diesen Gehäuseteilen ausgebildet sind und mittels einer Einrastbewegung auf einer durch die beiden länglichen Gehäuseteile (2, 3) verlaufenden Ebene und quer zur Längsrichtung der Gehäuseteile einrastbar sind.

2. Steckergehäuse nach Anspruch 1, dadurch gekennzeichnet, dass der Schnappverschluss am ersten länglichen Gehäuseteil (2) ein Sperrklinkenpaar (6) und am zweiten länglichen Gehäuseteil (3) ein Sperrleistenpaar (7) aufweist.

3. Steckergehäuse nach Anspruch 2, dadurch gekennzeichnet, dass die länglichen Gehäuseteile (2, 3) etwa quaderförmig ausgebildet sind und dass das Sperrklinkenpaar (6) und das Sperrleistenpaar (7) derart angeordnet sind, dass das Sperrklinkenpaar in eingerastetem Zustand das Sperrleistenpaar überlappt, so dass das Sperrleistenpaar zwischen den Sperrklinken des Sperrklinkenpaars liegt.

4. Steckergehäuse nach Anspruch 3, dadurch gekennzeichnet, dass die Sperrklinken des Sperrklinkenpaars (6) an federnden Zungen (10) angeordnet sind, welche in der Ebene paralleler Seitenwände (11) am ersten länglichen Gehäuseteil (2) verlaufen.

5. Steckergehäuse nach Anspruch 4, dadurch gekennzeichnet, dass auf beiden Seiten der Zungen (10) und im Abstand zu diesen Stützelemente (13) an der Längsseite (8) des ersten länglichen Gehäuseteils (2) angeordnet sind, wobei zwischen den Stützelementen und den Zungen Ausnehmungen (14) gebildet werden, und dass auf beiden Seiten der Sperrleisten (7) und anschliessend an diese Führungselemente (15) an der Längsseite (9) des zweiten länglichen Gehäuseteils (3) angeordnet sind, welche in die Ausnehmungen (14) des ersten länglichen Gehäuseteils (2) eingreifen.

6. Steckergehäuse nach Anspruch 5, dadurch gekennzeichnet, dass in den Stützelementen (13) parallel zu den Zungen (10) verlaufende Schlitze (16) angeordnet sind und dass die Führungselemente Seitenlappen (17) aufweisen, welche in die Schlitze eingreifen.

7. Steckergehäuse nach Anspruch 6, dadurch gekennzeichnet, dass die Führungselemente (15) und die Seitenlappen (17) zur Erhöhung der Elastizität in einer Ebene parallel zu den Zungen (10) geteilt ausgebildet sind.

8. Steckergehäuse nach einem der Ansprüche 5 bis 7, dadurch gekennzeichnet, dass zwischen den beiden Stützelementen (13) eine Anschlagleiste (18) verläuft, an welcher das Sperrleistenpaar (7) stirnseitig anliegt.

9. Steckergehäuse nach einem der Ansprüche 5 bis 8, dadurch gekennzeichnet, dass das Sperrleistenpaar (7) über einen im Querschnitt U-förmigen Verbindungssteg (19) miteinander verbunden ist.

10. Steckergehäuse nach einem der Ansprüche 1 bis 9 mit einem ersten und mit einem zweiten Steckerteil, dadurch gekennzeichnet, dass zum Herstellen einer Push-Pull-Steckverbindung die Steckerteile axial begrenzt verschiebbar in den länglichen Gehäuseteilen gehalten sind und dass die Gehäuseteile mit seitlichen Oeffnungen (20) und mit Entriegelungsrampen (21) versehen sind.

## Claims

1. A plug casing for an optical plug pair, comprising a first elongate casing portion (2) for receiving a first plug portion (4) and a second elongate casing portion (3) for receiving a second plug portion (5), wherein the two casing portions are held in lengthwise side-by-side relationship by way of connecting means in such a way that they are limitedly movable relative to each other on different axes (x, y, z) in space, characterised in that the connecting means are formed by a snap closure whose elements are arranged at adjacent longitudinal side walls (8, 9) of the elongate casing portions (2, 3) and are formed integrally with said casing portions and are latchable by means of a latching movement transversely with respect to the longitudinal direction of the casing portions and on a plane extending through the two elongate casing portions (2, 3).

2. A plug casing according to claim 1 characterised in that the snap closure has a locking catch pair (6) on the first elongate casing portion (2) and a locking bar pair (7) on the second elongate casing portion (3).

3. A plug casing according to claim 2 characterised in that the elongate casing portions (2, 3) are of an approximately cuboidal configuration and that the locking catch pair (6) and the locking bar pair (7) are arranged in such a way that in the latched condition the locking catch pair overlaps the locking bar pair so that the locking bar pair lies between the locking catches of the locking catch pair.

4. A plug casing according to claim 3 characterised in that the locking catches of the locking catch pair (6) are arranged on resilient tongues (10) which extend in the plane of parallel side walls (11) on the first elongate casing portion (2).

5. A plug casing according to claim 4 characterised in that support elements (13) are arranged at the longitudinal side (8) of the first elongate casing portion (2) on both sides of the tongues (10) and at a spacing relative to same, wherein openings (14) are formed between the support elements and the tongues, and that arranged at the longitudinal side (9) of the second elongate casing portion (3) on both sides of the locking bars (7) and adjoining same are guide elements (15) which engage into the openings (14) of the first elongate casing portion (2).

6. A plug casing according to claim 5 characterised in that slots (16) extending parallel to the tongues (10) are arranged in the support elements (13) and that the guide elements have side lugs (17) which engage into the slots.

7. A plug casing according to claim 6 characterised in that the guide elements (15) and the side lugs (17) are of a split configuration in a plane parallel to the tongues (10) to enhance the degree of elasticity.

8. A plug casing according to one of claims 5 to 7 characterised in that extending between the two support elements (13) is a stop bar (18) against which the locking bar pair (7) bears at the ends.

9. A plug casing according to one of claims 5 to 8 characterised in that the locking bar pair (7) is interconnected by way of a connecting limb (19) of U-shaped cross-section.

10. A plug casing according to one of claims 1 to 9 having a first and a second plug portion characterised in that to produce a push-pull plug connection the plug portions are axially limitedly displaceably held in the elongate casing portions and that the casing portions are provided with lateral apertures (20) and with unlocking ramps (21).

## Revendications

1. Enveloppe de connecteur pour une paire de connecteurs optiques, formée d'une première partie d'enveloppe allongée (2) destinée à recevoir un premier élément formant fiche (4), et d'une seconde partie d'enveloppe allongée (3) destinée à recevoir un second élément formant fiche (5), les deux parties d'enveloppe étant maintenues l'une à côté de l'autre par l'intermédiaire de moyens de liaison, longitudinalement, de manière à présenter une mobilité limitée l'une par rapport à l'autre dans différents axes dans l'espace (x, y, z), **caractérisée** en ce que les moyens de liaison sont formés par un dispositif d'encliquetage dont les éléments sont disposés sur des parois latérales longitudinales voisines (8, 9) des parties d'enveloppe allongées (2, 3), sont formés d'une seule pièce avec celles-ci et sont aptes à s'encliqueter grâce à un mouvement d'encliquetage sur un plan qui passe par les deux parties d'enveloppe allongées (2, 3) et transversalement par rapport au sens longitudinal de celles-ci.

2. Enveloppe de connecteur selon la revendication 1, caractérisée en ce que le dispositif d'encliquetage comporte sur la première partie d'enveloppe allongée (2) une paire de crans d'arrêt (6), et sur la seconde partie d'enveloppe allongée (3) une paire de rebords d'arrêt (7).

3. Enveloppe de connecteur selon la revendication 2, caractérisée en ce que les parties d'enveloppe allongées (2, 3) ont une forme à peu près parallélipipédique et en ce que la paire de crans d'arrêt (6) et la paire de rebords d'arrêt (7) sont disposées de telle sorte qu'en position encliquetée, la paire de crans d'arrêt couvre la paire de rebords d'arrêt pour que celle-ci se trouve entre les deux crans d'arrêt.

4. Enveloppe de connecteur selon la revendication 3, caractérisée en ce que les crans d'arrêt de la paire de crans d'arrêt (6) sont disposés sur des languettes élastiques (10) qui s'étendent dans le plan de parois latérales parallèles (11) prévues sur la première partie d'enveloppe allongée (2).

5. Enveloppe de connecteur selon la revendication 4, caractérisée en ce que des éléments d'appui (13) sont disposés sur le côté longitudinal (8) de la première partie d'enveloppe allongée (2), des deux côtés des languettes (10) et à une certaine distance de celles-ci, des cavités (14) étant formées entre les éléments d'appui et les languettes, et en ce qu'il est prévu, des deux côtés des rebords d'arrêt (7) et à la suite de ceux-ci, des éléments de guidage (15) sur le côté longitudinal (9) de la seconde partie d'enveloppe allongée (3) qui pénètrent dans les creux (14) de la première partie d'enveloppe allongée (2).

6. Enveloppe de connecteur selon la revendication 5, caractérisée en ce que des fentes (16) parallèles aux languettes (10) sont disposées dans les éléments d'appui (13) et en ce que les éléments de guidage comportent des pattes latérales (17) qui pénètrent dans les fentes.

7. Enveloppe de connecteur selon la revendication 6, caractérisée en ce que les éléments de guidage (15) et les pattes latérales (17) sont divisés dans un plan parallèle aux languettes (10) afin d'augmenter l'élasticité.

8. Enveloppe de connecteur selon l'une des revendications 5 à 7, caractérisée en ce qu'il est prévu entre les deux éléments d'appui (13) un rebord de butée (18) contre lequel est appliquée la paire de rebords d'arrêt (7), côté frontal.

9. Enveloppe de connecteur selon l'une des revendications 5 à 8, caractérisée en ce que la paire de rebords d'arrêt (7) est reliée grâce à une bande de liaison (19) à section transversale en U.

10. Enveloppe de connecteur selon l'une des revendications 1 à 9, comportant une première et une seconde partie d'enveloppe, caractérisée en ce que pour réaliser une liaison par enfichage push-pull, les éléments formant fiches sont maintenus dans les parties d'enveloppe allongées avec une mobilité axiale limitée et en ce que les parties d'enveloppe sont pourvues d'ouvertures latérales (20) et de rampes de déverrouillage (21).
